# EUROPÄISCHE PATENTSCHRIFT

(11) **EP 0 520 991 B1**
(45) Veröffentlichungstag und Bekanntmachung des Hinweises auf die Patenterteilung: **07.09.1994**
(21) Anmeldenummer: 91900177.6
(22) Anmeldetag: 13.12.1990
(51) Int. Cl.: H04Q 1/14

(54) **VERTEILERGESTELL IN EINEM TELEKOMMUNIKATIONSNETZ**
DISTRIBUTING FRAME FOR TELECOMMUNICATION NETWORKS
REPARTITEUR POUR RESEAUX DE TELECOMMUNICATIONS

(30) Priorität: 20.03.1990 DE 4008933
(43) Veröffentlichungstag der Anmeldung: 07.01.1993
(73) Patentinhaber: SIEMENS AKTIENGESELLSCHAFT, 80333 München (DE)
(72) Erfinder: DOLANSKY, Franz, D-8000 München 80 (DE); STEINER, Ewald, D-8137 Berg 3 (DE)
(86) Internationale Anmeldenummer: DE9000961
(87) Internationale Veröffentlichungsnummer: WO9115086

(56) Entgegenhaltungen:
- DE-A- 1 805 690
- DE-B- 1 082 301
- US-A- 4 204 095

## Beschreibung

Die Erfindung bezieht sich auf ein Verteilergestell in einem Telekommunikationsnetz wobei das Verteilergestell mit Kontaktbauteilen für zu den Teilnehmern führenden Außenleitungen und Kontaktbauteilen für zu den Vermittlungseinrichtungen führenden Innenleitungen sowie mit dazwischen verlaufenden Rangierleitungen versehen ist.

Ein derartiges Verteilergestell ist z. B. durch die DE-PS 18 05 690 bekannt geworden. Danach sind die Kontaktbauteile mittels Trägerteilen mit Abstand am Gestell befestigt. Die Kontaktbauteile für die Außenleitungen und die Kontaktbauteile für die Innenleitungen sind auf der gleichen Verteilerseite in übereinander liegenden Verteilerbereichen zusammengefaßt. Die Kontaktbauteile sind zu senkrecht orientierten Blöcken gestapelt. Zwischen benachbarten Blöcken ergeben sich senkrechte Rangierkanäle für die Rangierleitungen. Zwischen dem oberen und dem unteren Verteilerbereich für die Innen- bzw. Außenleitungen ist ein waagerechter Rangierkanal vorgesehen, der der waagerechten Verlegung der Rangierleitungen zwischen den verschiedenen senkrechten Rangierkanälen dient.

Durch die elektronische Vermittlungstechnik ist es bei der Neuinstallation möglich, die Innenleitungen und die Außenleitungen einander fest zuzuordnen. Z. B. für spätere Änderungen werden jedoch weiterhin Rangierdrähte benötigt.

Der Erfindung liegt die Aufgabe zugrunde, die Herstellung und die Montage des Verteilergestells zu verbessern.

Diese Aufgabe wird durch die Erfindung gemäß Anspruch 1 gelöst. Es ist nun möglich, den Verteiler weitgehend werkseitig vorzufertigen und zu verdrahten. Dies erfordert einen weitaus geringeren Aufwand als eine Montage und Verlegung am Einsatzort. Weiterhin können die in Kabeln zusammengefaßten Innen- und Außenleitungen zunächst vor dem Ansetzen der Stangen von diesen ungehindert im Grundgestell verlegt werden.

Vorteilhafte Weiterbildungen der Erfindung sind in den Ansprüchen 2 bis 5 gekennzeichnet:

Durch die Weiterbildungen nach den Ansprüchen 2 und 3 können die Befestigungselemente für die Stangen nach Bedarf in einem späteren Ausbaustadium einzeln nachgerüstet werden, wodurch die entsprechende Vorleistung zunächst eingespart wird.

Durch die Weiterbildung nach Anspruch 3 werden die Verlegung störende Verbindungen zwischen den oberen und unteren Befestigungsschienen vermieden.

Im folgenden wird die Erfindung anhand eines in der Zeichnung dargestellten Ausführungsbeispieles näher erläutert.

Es zeigen schematisiert:
- Fig. 1: eine Seitenansicht eines fertig montierten Verteilergestells,
- Fig. 2: eine Draufsicht auf einen Teil des Verteilergestells nach Figur 1 und
- Fig. 3: eine perspektivische Darstellung eines Teils des Verteilergestells nach Figur 1 und 2.

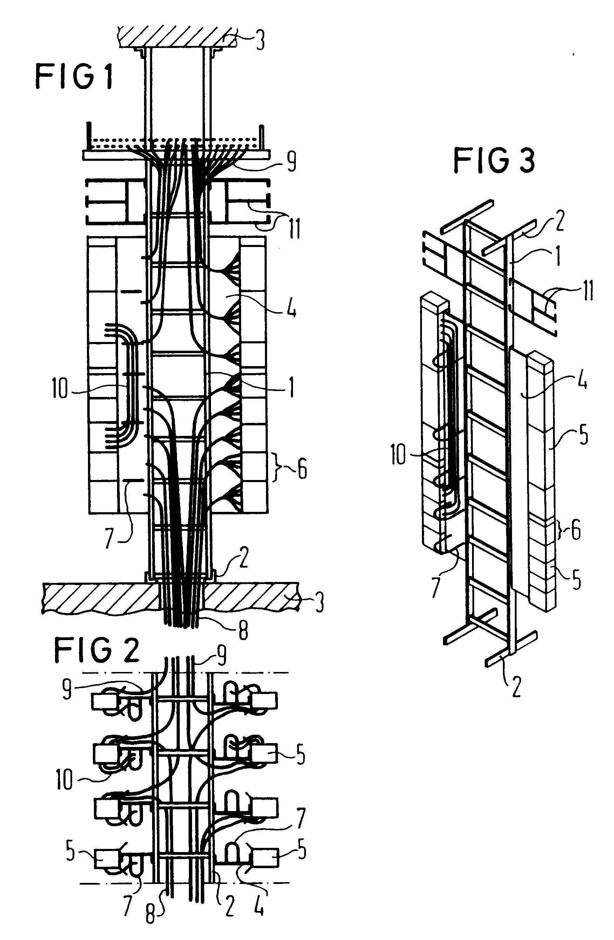

Nach den Figuren 1, 2 und 3 sind senkrecht stehende leiterartige Tragelemente 1 zwischen paarweise angeordneten waagerechten oberen und unteren Schienen 2 befestigt, die ihrerseits an das Verteilergestell umgebenden Gebäudeteilen 3 gehalten sind. Die Tragelemente 1 tragen beidseitig aus Blech u-förmig gebogene senkrecht stehende streifenförmige Stangen 4 an denen Kontaktbauteile 5 befestigt sind. Diese sind üblicherweise scheibenförmig ausgebildet und zu senkrecht stehenden Blöcken 6 übereinander gestapelt. Entsprechend der senkrechten Erstreckung der Stange 4 sind mehrere Blöcke 6 in einer Reihe übereinander angeordnet. Zwischen benachbarten Reihen von Kontaktbauteilen sind senkrechte Zwischenräume gebildet, in die u-förmige Rangierbügel 7 hineinragen, die an den Stangen 4 befestigt sind.

Von unten ankommende Außenleitungen 8 sind zwischen benachbarten Tragelementen 1 nach oben geführt und an die unteren Kontaktbauteile 5 angeschlossen. An die oberen Kontaktbauteile sind Innenleitungen 9 angeschlossen, die zwischen den benachbarten Tragelementen 1 nach oben abgeführt sind. Zwischen den oberen und den unteren Kontaktbauteilen sind Rangierdrähte 10 verlegt, die die Außenleitungen 8 mit den Innenleitungen 9 elektrisch verbinden. Diese sind in den Rangierbügeln 7 geführt. Oberhalb der Kontaktbauteile 5 und der Stangen 4 sind Rangierhaken angeordnet, die eine waagerechte Führung von Rangierdrähten ermöglichen, die zwischen verschiedenen Stangen 4 verlegt werden können. Derartige stangenübergreifende Rangierungen können in einem späteren Betriebsstadium erforderlich werden. Die Kontaktbauteile 5 einer senkrechten Reihe werden komplett an der Stange 4 vormontiert und über die Rangierdrähte 10 miteinander verbunden. Diese komplett vorgefertigte Einheit wird am Einsatzort am Tragelement 1 befestigt.

## Patentansprüche

1. Verteilergestell in einem Telekommunikationsnetz, insbesondere in einer Fernsprechvermittlungsanlage, mit Kontaktbauteilen (5) für zu den Teilnehmern führenden Außenleitungen (8) und Kontaktbauteilen (5) für zu den Vermittlungseinrichtungen führenden Innenleitungen (9) sowie mit dazwischen verlaufenden Rangierdrähten (10), wobei die Kontaktbauteile (5) mittels Trägerteilen (z. B. 4) mit Abstand am Grundgestell befestigt sind, wobei die Kontaktbauteile (5) für die Außenleitungen (8) und die Kontaktbauteile (5) für die Innenleitungen (9) auf derselben Verteilerseite in übereinander liegenden Verteilerbereichen zusammengefaßt sind,
**dadurch gekennzeichnet**,
daß die Trägerteile für die Kontaktbauteile (5) als sich senkrecht erstreckende formsteife Stangen (4) ausgebildet sind, an denen die Kontaktbauteile (5) für die Innen- und Außenleitungen (9, 8) vor dem Anbau an das Gestell befestigt sind, daß die Rangierdrähte (10) innerhalb der einzelnen Stangen (4) vor dem Anbau an das Gestell verlegt sind und daß die Stangen (4) mit den vorverdrahteten Kontaktbauteilen (5) als separate Module lieferbar und am Gestell befestigbar sind.

2. Verteilergestell nach Anspruch 1,
**dadurch gekennzeichnet**,
daß das Gestell obere und untere waagerechte Schienen (2) aufweist, zwischen senkrechte einzeln montierbare Holme (z. B. 1) befestigt sind, an denen die Stangen (4) gehalten sind.

3. Verteilergestell nach Anspruch 2,
**dadurch gekennzeichnet**,
daß zwei parallele Holme mittels Quersprossen zu einem leiterartigen modularen Tragelement (1) verbunden sind, das zwischen zwei oberen und unteren parallelen Schienenpaaren (2) gehalten ist.

4. Verteilergestell nach Anspruch 1, 2 oder 3,
**dadurch gekennzeichnet**,
daß die Stangen (4) mit den angebrachten Kontaktbauteilen (5) und den verlegten Rangierdrähten (10) vor dem Einbau in das Gestell am Tragelement (1) befestigbar sind.

5. Verteilergestell nach Anspruch 2, 3 oder 4,
**dadurch gekennzeichnet**,
daß die oberen und unteren Schienen (2) unabhängig voneinander und formsteif mittelbar oder unmittelbar an Gebäudeteilen (3) befestigt sind.

## Claims

1. Distribution rack in a telecommunications network, preferably in a telephone exchange, having contact components (5) for external lines (8) leading to the subscribers and contact components (5) for internal lines (9) leading to the switching devices, and having jumper lines (10) running between them, the contact components (5) being mounted on the basic rack, spaced apart, by means of supporting parts (e.g. 4), the contact parts (5) for the external lines (8) and the contact parts (5) for the internal lines (9) being combined in distribution regions located one above the other on the same distribution side, characterised in that the supporting parts for the contact components (5) are constructed as vertically extending dimensionally rigid bars (4) on which the contact components (5) for the internal and external lines (9, 8) are mounted before fitment to the rack, in that jumper wires (10) are laid within the individual bars (4) before fitment to the rack, and in that the bars (4), with the pre-wired contact components (5), can be supplied and mounted on the rack as separate modules.

2. Distribution rack according to Claim 1, characterised in that the rack has upper and lower horizontal rails (2), there between are mounted vertical struts (e.g. 1) which can be installed individually and on which the bars (4) are held.

3. Distribution rack according to Claim 2, characterised in that two parallel struts are connected by means of transverse cross bars to form a ladder-like modular supporting element (1), which is held between two upper and lower parallel rail pairs (2).

4. Distribution rack according to Claim 1, 2 or 3, characterised in that the bars (4), with the contact components (5) fitted and the jumper wires (10) laid, can be mounted on the supporting element (1) before installation in the rack.

5. Distribution rack according to Claim 2, 3 or 4, characterised in that the upper and lower rails (2) are mounted indirectly or directly on building parts (3) independently of one another and in a dimensionally rigid manner.

## Revendications

1. Châssis répartiteur dans un réseau de télécommunication, notamment dans une installation de commutation téléphonique, comportant des composants de contact (5) pour des lignes extérieures (8) reliées aux abonnés, et des composants de contact (5) pour des lignes intérieures (9) reliées à des dispositifs répartiteurs, ainsi que des jarretières de connexion (10) qui s'étendent entre ces conducteurs, et dans lequel les composants de contact (5) sont fixés à distance, au moyen d'éléments de support (par exemple 4) sur le châssis de base, et les composants de contact (5) pour les lignes extérieures (8) et les composants de contact (5) pour les lignes intérieures (9) sont réunis sur le même côté du répartiteur dans des zones superposées de ce dernier, caractérisé par le fait que les éléments de support pour les composants de contact (5) sont réalisés sous la forme de barres de forme rigide (4), qui s'étendent verticalement et sur lesquelles les composants de contact (5) pour les lignes intérieures et extérieures (9, 8) sont fixés avant le montage sur le châssis, que les jarretières de connexion (10) sont disposées à l'intérieur des différentes barres (4) avant le montage sur le châssis et que les barres (4) équipées des composants de contact (5) préalablement câblés peuvent être délivrées sous la forme de modules séparés et être fixées sur le châssis.

2. Châssis répartiteur suivant la revendication 1, caractérisé par le fait que le châssis comporte des rails horizontaux supérieurs et inférieurs (2), qui sont fixés entre des montants verticaux (par exemple 1) pouvant être montés individuellement et sur lesquels les barres (4) sont retenues.

3. Châssis répartiteur suivant la revendication 2, caractérisé par le fait que deux montants parallèles sont réunis au moyen de traverses pour former un élément de support modulaire en forme de conducteur (1), qui est maintenu entre deux couples de rails parallèles supérieurs et inférieurs (2).

4. Châssis répartiteur suivant la revendication 1, 2 ou 3, caractérisé par le fait que les barres (4), sur lesquelles sont montés les composants de contact (5) et sur lesquelles les jarretières de connexion (10) peuvent être fixées, avant le montage dans le châssis sur l'élément de support (1).

5. Cadre de répartiteur suivant la revendication 2, 3 ou 4, caractérisé par le fait que les rails inférieurs et supérieurs (2) sont fixés indépendamment les uns des autres et avec une forme rigide directement ou indirectement sur des parties (3) d'un bâtiment.
